Europäisches Patentamt

European Patent Office

Office européen des brevets

(19)

(11) Numéro de publication: **0 249 569**
A1

# DEMANDE DE BREVET EUROPEEN

(12)

(21) Numéro de dépôt: **87420147.8**

(22) Date de dépôt: **02.06.87**

(51) Int. Cl.⁴: **B 60 B 3/04**
B 60 B 3/06, B 60 B 21/02

(30) Priorité: **03.06.86 FR 8608675**

(43) Date de publication de la demande:
**16.12.87 Bulletin 87/51**

(84) Etats contractants désignés:
**AT BE CH DE ES GB GR IT LI LU NL SE**

(71) Demandeur: **2G, SARL**
**5 rue de la Gare de Cuire**
**F-69300 Caluire (FR)**

(72) Inventeur: **Medigue, Raymond**
**Chemin de Vassieux**
**F-69300 Caluire (FR)**

**Gotti, Camille**
**Boulevard de l'Estérel**
**F-06210 Mandelieu (FR)**

(74) Mandataire: **Wind, Jacques et al**
**Cabinet Germain et Maureau BP 3011**
**F-69392 Lyon Cédex 03 (FR)**

(54) Roue en alliage léger pour véhicule.

(57) Roue en alliage léger pour véhicule, en particulier pour véhicule de compétition.

Les deux couronnes (2, 3) de la jante (1) sont emboîtées l'une dans l'autre, puis fixées par soudure. Une collerette centripète (9) de faible épaisseur radiale, retient axialement le moyeu (4).

FIG.3

EP 0 249 569 A1

**Description**

Roue en alliage léger pour véhicule.

La présente invention se rapporte à une roue en alliage léger pour véhicule, notamment pour véhicule de tourisme ou de competition, du type comportant une jante formée d'au moins deux couronnes de révolution fixées l'une à l'autre de manière coaxiale.

Les roues de ce type comportent d'une manière générale une jante telle que ci-dessus définie, et un moyeu ou voile central en forme d'étoile à généralement cinq branches, permettant de définir des ouvertures de ventilation entre la partie intérieure de la jante et le moyeu. La jante est généralement constituée de deux couronnes accolées par leur petite base et fixées rigidement l'une à l'autre par boulonnage, ainsi que dans certains cas par soudage, permettant à la fois d'assurer une bonne étanchéité et de diminuer le nombre de boulons, donc de permettre un allègement de la roue. Pour permettre le boulonnage des bases des deux couronnes l'une sur l'autre et sur le moyeu de la roue lui-même, ces couronnes sont chacune munies d'une collerette centripète.

Ces roues connues ont pour inconvénient principal à l'heure actuelle de ne pas permettre de rentrer suffisamment les pneus du véhicule en direction de l'axe longitudinal de celui-ci. On est en effet limité dans cette opération par la largeur minimale de la couronne extérieure, nécessaire pour positionner correctement le pneu sur sa jante. Or, le fait de rentrer, en particulier pour les véhicules automobiles de compétition, les pneumatiques vers l'intérieur du véhicule, est actuellement un impératif correspondant à une conception moderne de ce type de véhicule. On ne peut pas non plus diminuer exagérément la longueur des arbres de roue car l'on aboutirait alors à des impossibilités d'implantation d'ordre mécanique.

Par ailleurs, la présence d'une double collerette centripète, nécessaire pour permettre le boulonnage des deux couronnes formant la jante l'une sur l'autre et sur le moyeu est souvent considérée comme pénalisante pour l'efficacité de la ventilation s'effectuant entre le moyeu et la jante, car ces collerettes diminuent nécessairement la surface des ouvertures entre les branches du moyeu et ladite jante. Il serait donc souhaitable de diminuer au maximum la hauteur en direction centripète de ces collerettes, et d'une façon plus générale d'augmenter au maximum la surface effective de ventilation à travers la roue.

L'invention se rapporte donc à une roue du type comportant une jante formée de deux couronnes de révolution fixées l'une sur l'autre de manière coaxiale, qui ne présente pas les inconvénients mentionnés ci-dessus. Elle est caractérisée en ce que la couronne intérieure de la jante, destinée à être placée vers l'intérieur du véhicule, est telle qu'au moins sa partie axiale extrême extérieure, c'est-à-dire la plus éloignée de l'intérieur du véhicule, ait une forme de cylindre à section circulaire, sur lequel est emboîtée étroitement et fixée par soudure, ou analogue, la partie annulaire intérieure de la petite base de la couronne extérieure de la jante, et en ce que ladite partie axiale extrême extérieure cylindrique de ladite couronne intérieure de la jante est seule équipée de moyens de solidarisation avec le moyeu de la roue.

Avantageusement, ces moyens de solidarisation comportent au moins une collerette centripète de retenue axiale de la face extérieure du moyeu, située à l'extrémité axiale extérieure dudit cylindre à section circulaire formant l'extrémité axiale extérieure de la couronne intérieure de la jante: Préférentiellement, cette collerette centripète de retenue de la face extérieure du moyeu est associée à un moyen de retenue de la face intérieure du moyeu constitué par une soudure entre la périphérie de ladite face intérieure et la partie intérieure centripète de la couronne intérieure de la jante.

L'invention sera mieux comprise, et d'autres caractéristiques apparaîtront, au cours de la description suivante d'un exemple de réalisation, en référence aux dessins annexés dans lesquels :

Figure 1 est une vue en perspective d'une roue en alliage léger pour véhicule automobile, conforme à l'invention;

Figure 2 est une vue de détail, en perspective coupée, de la roue de la figure 1,

Figure 3 est une vue en coupe axiale de la roue de la figure 1.

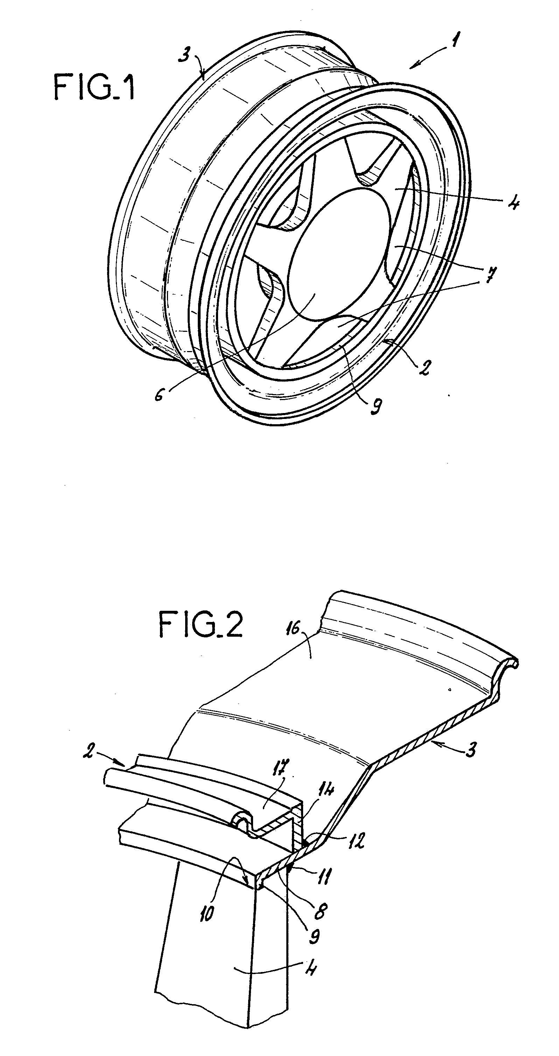

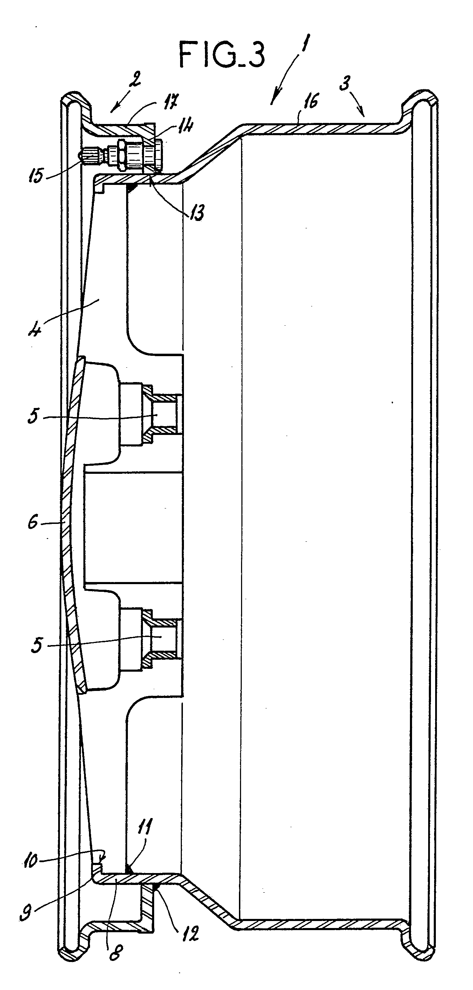

En se reportant à l'ensemble des figures 1 à 3, la roue de l'invention est constituée d'une jante 1, elle-même composée de deux couronnes de révolution, une couronne extérieure radialement 2 et une couronne radialement intérieure 3 fixée l'une à l'autre de manière coaxiale, et d'un moyeu 4 assurant la liaison entre la jante 1 et l'arbre de roue, non représenté sur le dessin. De manière très classique, le moyeu est équipé de plusieurs trous taraudés 5 destinés à la fixation de la roue. De manière classique également le moyeu est équipé d'un enjoliveur 6 aisément amovible. Comme on le voit sur la figure 1 le moyeu 4 forme une étoile à cinq branches permettant de définir cinq espaces de ventilation 7.

Conformément à l'invention, la couronne axialement intérieure 3 est telle que sa partie axiale extrême extérieure 8, c'est-à-dire sa partie destiné à être la plus éloignée de l'intérieur du véhicule, a une forme de cylindre à section circulaire, comme on le voit sur le dessin. Par ailleurs, l'extrémité axiale extérieure de ce cylindre 8 présente une petite collerette centripète 9 qui permet, grâce à une rainure circulaire 10 du moyeu 4, qui lui est adaptée, de retenir axialement la face extérieure de ce moyeu. Par ailleurs, le moyeu comporte, sur la périphérie de sa face inférieure un moyen de retenue axiale qui est constitué par un cordon de soudure 11 entre cette périphérie et la partie intérieure centripète du cylindre 8.

Par ailleurs, conformément à un aspect essentiel de l'invention, la couronne extérieure 2 est emboîtée étroitement sur la surface extérieure du cylindre 8, auquel elle est fixée par un cordon de soudure 12. Pour réaliser cet emboîtement, il est nécessaire que la partie annulaire intérieure 13 de la petite base 14 de la couronne extérieure 2 ait un diamètre égal au diamètre extérieur du cylindre 8 au très léger jeu près permettant un emboîtement étroit des deux pièces. La base 14 se présente avantageusement sous la forme d'une collerette radiale centripète orthogonale à la surface cylindrique externe apparente du cylindre 8. Sur cette collerette 14 est fixée une valve 15 destinée au gonflage du pneu. Avantageusement, comme on le voit sur le dessin, la surface cylindrique externe apparente 16 de la couronne 3 et la surface cylindrique externe apparente 17 de la couronne 2 sont situées sur un même cylindre axial de révolution, ce qui permet de bien positionner le pneu sur la jante.

Comme mentionné précédemment la collerette centripète 9 est de faible épaisseur radiale, juste suffisante pour assurer la rétention axiale de la face extérieure du moyeu 4, ce qui permet d'avoir des ouvertures d'aération 7 d'une grandeur maximale.

## Revendications

1. Roue pour véhicule, notamment pour véhicule automobile, du type comportant une jante (1) formée de deux couronnes de révolution, une couronne extérieure (2) et une couronne intérieure (3), fixées l'une à l'autre de manière coaxiale, ainsi qu'un moyeu (4) assurant la liaison entre la jante et l'arbre de roue, caractérisé en ce que la couronne intérieure (3) de la jante, destinée à être placée vers l'intérieur du véhicule, est telle qu'au moins sa partie axiale extrême extérieure (8), c'est-à-dire la plus éloignée de l'intérieur du véhicule, ait une forme de cylindre à section circulaire, sur lequel est emboîtée étroitement et fixée par soudure, ou analogue, la partie annulaire intérieure (13) de la petite base de la couronne extérieure (2) de la jante, et en ce que ladite partie axiale extrême extérieure cylindrique de ladite couronne intérieure (3) est seule équipée de moyens de solidarisation (9, 11) avec ledit moyeu.

2. Roue selon la revendication 1, caractérisée en ce que lesdits moyens de solidarisation comportent une collerette centripète (9) de retenue axiale de la face extérieure du moyeu, située à l'extrémité axiale extérieure dudit cylindre (8) à section circulaire.

3. Roue selon la revendication 2, caractérisée en ce que lesdits moyens de solidarisation comportent en outre un moyen de retenue axiale de la face intérieure du moyeu constitué par une soudure (11) entre la périphérie de cette face intérieure et la partie intérieure centripète de la couronne intérieure (3) de la jante.

4. Roue selon la revendication 2 ou la revendication 3, caractérisée en ce que ladite collerette centripète (9) est de faible épaisseur radiale, juste suffisante pour assurer la rétention axiale de la face extérieure du moyeu.

5. Roue selon l'une des revendications 1 à 4, caractérisée en ce que les surfaces cylindriques externes apparentes (16, 17) des deux couronnes sont situées sur un même cylindre axial de révolution.

6. Roue selon l'une des revendications 1 à 5, caratérisé en ce que la petite base de la couronne extérieure (2) comporte une collerette radiale centripète (14) orthogonale à la surface cylindrique externe apparente de ladite couronne extérieure.

FIG.1

0249569

FIG.2

FIG_3

0249569

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 181 230 (KRONPRINZ) <br> * Page 1, colonne de droite, lignes 10-19; figure 2 * | 1 | B 60 B 3/04 <br> B 60 B 3/06 <br> B 60 B 21/02 |
| A | US-A-1 579 328 (LA BRIE) <br> * Page 1, ligne 101 - page 2, ligne 13; figure 1 * | 1,2,6 | |
| A | GB-A- 814 186 (DUNLOP) <br> * Page 1, lignes 69-77; figure 1 * | 1,3,5 | |
| A | DE-A-1 912 415 (DUNLOP) <br> * Page 6, ligne 30 - page 7, ligne 6; figure 6 * | 1,5 | |
| A | EP-A-0 054 931 (VEREINIGTE METALLWERKEN) <br> * Page 3, lignes 24-28; figure 4 * | 1 | DOMAINES TECHNIQUES RECHERCHES (Int. Cl.4) |
| A | US-A-2 545 130 (ASH) <br> * Colonne 2, lignes 13-18; figures 1,3 * | 1 | |
| A | DE-A-3 028 827 (KISSLING) <br> * Page 4, ligne 25 - page 5, ligne 23; figure 2 * | 1 | |

Le présent rapport de recherche a été établi pour toutes les revendications

| Lieu de la recherche | Date d'achèvement de la recherche | Examinateur |
|---|---|---|
| LA HAYE | 08-09-1987 | AYITER I. |